# EUROPÄISCHE PATENTANMELDUNG

(11) **EP 3 165 072 A1**
(43) Veröffentlichungstag der Anmeldung: **10.05.2017**
(21) Anmeldenummer: 16401089.4
(22) Anmeldetag: 02.11.2016
(51) Int. Cl.: A01C 17/00, A01C 21/00

(54) **ZENTRIFUGALSTREUER MIT VERBESSERTER MASSENSTROMBESTIMMUNG**

(30) Priorität: 06.11.2015 DE 102015119081
(71) Anmelder: Amazonen-Werke H. Dreyer GmbH & Co. KG, 49205 Hasbergen (DE)
(72) Erfinder: Dreyer, Justus, 49076 Osnabrück (DE); Rahe, Florian, 49504 Lotte (DE)

(57) **Zusammenfassung**

Die Erfindung umfasst einen Zentrifugalstreuer zum Ausbringen von Streugut, umfassend: einen Vorratsbehälter (1) für das auszubringende Streugut, eine Wiegeeinrichtung zum Bestimmen eines aktuellen Wertes der Streugutmenge im Vorratsbehälter (1), wenigstens eine Schleuderscheibe (5), der ein einstellbares Dosierorgan (4) zugeordnet ist, zweite Messvorrichtung (15, 16) zum Bestimmen eines aktuellen Wertes des über das Dosierorgan (4) auf die Schleuderscheibe (5) auslaufenden Massenstroms, und eine Steuereinheit (18), die mit der Wiegeeinrichtung und der Sensoreinrichtung (15, 16) verbunden ist, wobei ein Programm im Speicher der Steuereinheit (18) geeignet ist, eine zeitgebundene Zuordnung der Messwerte der Wiegevorrichtung zu den zumindest annähernd gleichzeitig bestimmten Messwerten der zweiten Messvorrichtung (15,16) vorzunehmen und bei der Bestimmung der Ausbringrate (ms1) mittels der Messwerte der Wiegevorrichtung diejenigen Messwerte unberücksichtigt zu lassen, für die mittels des Programms aus den zugeordneten Messwerten der zweiten Messvorrichtung (15,16) ermittelt wurde, dass zumindest eine Zuführöffnung zumindest teilweise blockiert ist.

## Beschreibung

Die Erfindung betrifft einen Zentrifugalstreuer zum Ausbringen von Streugut, insbesondere einen Zentrifugaldüngersteuer zum Ausbringen von Dünger.

Bei derartigen Zentrifugalstreuern wird das sich in einem Vorratsbehälter befindliche Streugut über einstellbare Dosierorgane den Wurfschaufeln der Schleuderscheiben in einstellbaren Mengen zugeleitet.

Zur Überwachung und Regelung derartiger Zentrifugalstreuer wird häufig der Massenstrom des Streuguts herangezogen. Dafür ist es bekannt, eine Wiegeeinrichtung vorzusehen, mit der ein aktueller Wert der Streugutmenge im Vorratsbehälter feststellbar ist und basierend auf der zeitlichen Änderung der Streugutmenge der Massenstrom ermittelt wird. Solche Wiegeeinrichtungen haben jedoch den Nachteil, dass auftretende Verstopfungen im Bereich der Dosierorgane nur zeitverzögert ermittelt werden können, so dass in diesen Fällen der Massenstrom fehlerhaft detektiert wird.

Alternativ ist es durch die EP 1 008 288 B1 bekannt, den Antriebselementen der Schleuderscheiben eine Messvorrichtung zur Ermittlung des Antriebsdrehmomentes zuzuordnen. Basierend auf dem festgestellten Drehmoment kann ein Istwert des Massenstroms ermittelt werden. Durch Vergleich mit einem Sollwert kann eine Regelung der Dosierorgane stattfinden.

Auch die Messung des Massenstroms basierend auf einem Wert für das Antriebsdrehmoment ist jedoch fehleranfällig. So kann beispielsweise Verschleiß dazu führen, dass die zur Ermittlung des Massenstroms aus dem Antriebsdrehmoment verwendete Kennlinie die tatsächlichen Verhältnisse nicht mehr korrekt wiederspiegelt. Bereits kleine Abweichungen in der Kennlinie von den tatsächlichen Verhältnissen können zu merkbaren Fehlern führen. Auch sind die Ergebnisse der Drehmomentmessung typischerweise stark temperaturabhängig.

Der Erfindung liegt daher die Aufgabe zugrunde, einen Zentrifugalstreuer sowie ein Verfahren zum Betreiben eines Zentrifugalstreuers bereitzustellen, welche eine präzisere Bestimmung der Ausbringrate ermöglichen. Diese Aufgabe wird durch einen Zentrifugalstreuer gemäß Patentanspruch 1 sowie durch ein Verfahren gemäß Patentanspruch 9 gelöst. Weitere vorteilhafte Ausgestaltungen der Erfindung sind in den abhängigen Ansprüchen angegeben.

Gemäß der Erfindung ist es also vorgesehen, mittels eines Programms im Speicher einer Steuereinheit eine zeitgebundene Zuordnung der Messwerte einer Wiegevorrichtung zu den zumindest annähernd gleichzeitig bestimmten Messwerten einer zweiten Messvorrichtung vorzunehmen, wobei die zweite Messvorrichtung zur Messung einer der Ausbringrate proportionalen Größe geeignet ist, und bei der Bestimmung der Ausbringrate mittels der Messwerte der Wiegevorrichtung diejenigen Messwerte unberücksichtigt zu lassen, für die mittels des Programms aus den zugeordneten Messwerten der zweiten Messvorrichtung ermittelt wurde, dass zumindest eine Zuführöffnung zumindest teilweise blockiert ist. Es ist somit vorgesehen zur Bestimmung der Ausbringmenge bzw. des Massenstromes in erster Linie die Werte der Wiegevorrichtung heranzuziehen, jedoch zur Bestimmung von Verstopfungen und/oder Blockaden der Zuführöffnungen des Düngers zu den Schleuderscheiben eine zweite Messvorrichtung zu verwenden. Die Massenstrom-/ Ausbringratenbestimmung kann dann für den Zeitraum in dem eine Blockade vorliegt ausgesetzt werden. Anderenfalls würde durch die Steuereinheit fälschlicherweise angenommen, dass sich die Ausbringrate beispielsweise durch ein verändertes Rieselverhalten geändert hätte und es würde entsprechend auf eine größere Ausbringmenge geregelt.

In einer vorteilhaften Weiterbildung der Erfindung ist das Programm im Speicher der Steuereinheit ferner dazu ausgelegt, die Blockade der Zuführöffnung mittels zumindest eines Steuerbefehls zu beseitigen und ferner die in dem Zeitraum, welcher zur Abarbeitung des zumindest einen Steuerbefehls benötigt wird, bestimmten Messwerte der Wiegevorrichtung bei der Berechnung der Ausbringrate ebenfalls unberücksichtigt zu lassen. Auf diese Weise kann effektiv mittels eines Steuerbefehls, welcher insbesondere das vollständige oder teilweise Öffnen einer Dosiervorrichtung für einen festgelegten Zeitraum bewirken kann, eine vorliegende Verstopfung beseitigt werden. Die über diesen Zeitraum bestimmten Messwerte der Wiegevorrichtung haben entsprechend keine Aussagekraft, da sich der Massenstrom durch das beabsichtigte vollständige oder teilweise Öffnen einer Dosiervorrichtung kurzzeitig stark erhöhen kann. Es kann somit verhindert werden, dass diese Erhöhung des Massenstromes zu einer Verfälschung der Massenstrom-/Ausbringratenbestimmung führt.

In einer vorteilhaften Ausgestaltung ist die zweite Messvorrichtung als Radar- oder Ultraschallsensor ausgebildet. Derartige Sensoren werden zur Bestimmung der Streucharakteristik verwendet und es kann an Hand der Signalstärke ebenfalls eine Abschätzung einer Ausbringmenge ermittelt werden. Insbesondere kann ein abrupter Abfall in der Signalstärke verwendet werden, um eine auftretende Verstopfung zu detektieren.

Alternativ kann die zweite Messvorrichtung zur Bestimmung des Antriebsdrehmomentes zumindest einer der Schleuderscheiben ausgebildet sein. Es kann auch um ein zu dem Antriebsdrehmoment proportionaler Wert, beispielsweise ein Hydraulikdruck, bestimmt werden. Das Antriebsdrehmoment der Schleuderscheiben eines Zentrifugalstreuers ist abhängig von der Ausbringmenge bzw. dem Massenstrom. Somit lässt sich aus einem abrupten Abfall des Antriebsdrehmomentes auf eine Verstopfung bzw. ein Leerlaufen des Vorratsbehälters schließen.

In einer vorteilhaften Weiterbildung der Erfindung ist die zweite Messvorrichtung zur separaten Bestimmung der Ausbringraten oder entsprechenden zu diesen proportionalen Größe der zumindest zwei Schleuderscheiben ausgebildet ist. Es kann hierdurch ein Vergleich der Messwerte der Messvorrichtungen der ersten und der zweiten Schleuderscheibe vorgenommen werden.

Verringert sich die Ausbringrate einer ersten Schleuderscheibe im Vergleich zu einer zweiten, so ist dies ein starker Hinweis auf eine sich ausbildende oder eine vorliegende Verstopfung und/oder Blockade.

In einer vorteilhaften Weiterbildung der Erfindung wird die aus den Messsignalen der Wiegevorrichtung berechnete aktuelle Ausbringrate aus einem gefilterten Mittelwert der Messsignale oder einem gefilterten Mittelwert von zu diesen Messsignalen proportionalen Werten bestimmt. Hierbei kann es sich beispielsweise um eine gleitende Mittelwertbildung oder auch andere geeignete Filter handeln. Auf diese Weise können kurzzeitige Störungen der Wiegevorrichtung, beispielsweise hervorgerufen durch Stöße auf Grund von Bodenunebenheiten, herausgemittelt werden.

In einer vorteilhaften Weiterbildung der Erfindung werden bei einer gefilterten Mittelwertbildung über einen ersten Zeitraum und einer detektierten Blockade zumindest einer Zuführöffnung über einen zweiten Zeitraum und/oder einer Abarbeitung eines Steuerbefehls über einen dritten Zeitraum, die zweiten und/oder dritten Zeiträume bei der gefilterten Mittelwertbildung durch das Programm nicht berücksichtigt. Auf diese Weise kann effizient eine Fehlbestimmung des Massenstromes bzw. der Ausbringmenge verhindert werden und nach der Beseitigung der Blockade kehrt das Steuerprogramm direkt wieder zu der für die vorgesehene Ausbringmenge korrekten Einstellung der Dosier- und/oder Zuführorgane des Düngers zu den Schleuderscheiben zurück.

Es wird ferner ein Verfahren zur Ausbringratenbestimmung vorgeschlagen, wobei eine zeitgebundene Zuordnung der Messwerte der Wiegevorrichtung zu den zumindest annähernd gleichzeitig bestimmten Messwerten der zweiten Messvorrichtung vorgenommen wird und wobei bei der Bestimmung der Ausbringrate mittels der Messwerte der Wiegevorrichtung diejenigen Messwerte unberücksichtigt bleiben, für die aus den zugeordneten Messwerten der zweiten Messvorrichtung ermittelt wurde, dass zumindest eine Zuführöffnung zumindest teilweise blockiert ist. Auf diese Weise ist es möglich, dass fehlerhafte, weil auf Blockaden und/oder Verstopfungen zurückzuführende, Messwerte bei der Bestimmung der Ausbringrate unberücksichtigt bleiben.

Weitere Merkmale und Vorteile der Erfindung sind den weiteren Unteransprüchen zu entnehmen und/oder werden nachfolgend anhand der beispielhaften Figur erläutert. Dabei zeigt:
- Fig. 1: einen beispielhaften Zentrifugalstreuer in einer Ansicht von hinten und in Prinzipdarstellung und
- Fig. 2: eine beispielhafte, schematische Messkurve der Ausbringmenge.

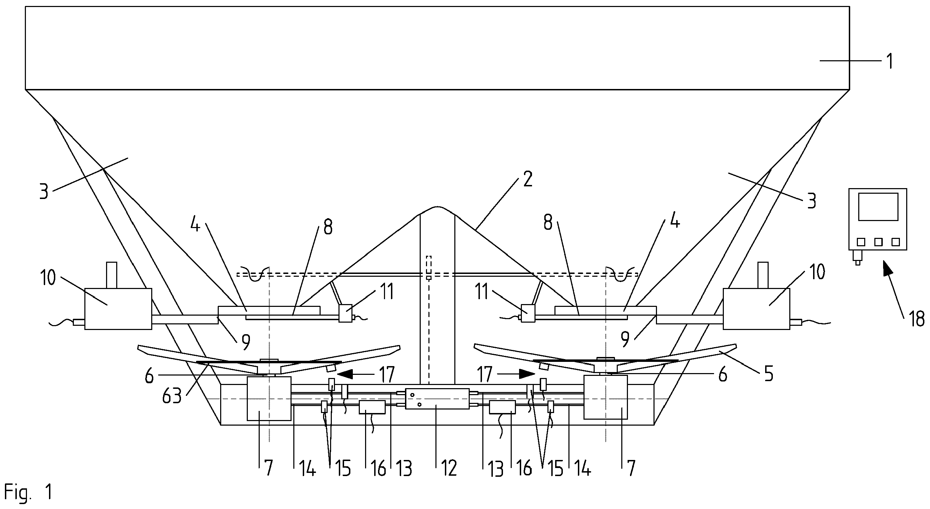

Der beispielhafte Zentrifugalstreuer gemäß Fig. 1 ist ein landwirtschaftlicher Schleuderdüngerstreuer. Dieser weist einen Vorratsbehälter 1 für den auszubringenden Dünger auf. Der Vorratsbehälter 1 weist in seinem unteren Bereich zwei durch ein dachförmiges Mittelteil 2 voneinander getrennte Auslauftrichter 3 auf.

Die Auslauftrichter 3 sind jeweils durch ein Dosierorgan 4 abgeschlossen, über die der Dünger in einstellbaren Mengen den darunter angeordneten Schleuderscheiben 5 zugeführt wird. Jede Schleuderscheibe 5 wird über eine Schleuderscheibenwelle 6 und einen Hydraulikmotor 7 angetrieben. Es versteht sich, dass der Antrieb über einen Hydraulikmotor nur als Beispiel dient und andere Antriebe, beispielsweise ein mechanischer oder elektrischer Antrieb ebenfalls möglich sind.

Auf den Schleuderscheiben 5 sind Wurfschaufeln angeordnet, welche das ihnen zugeleitete Streugut in Breitenverteilung auf der Bodenoberfläche verteilen. Die Wurfschaufeln können in ihrer Position veränderbar sein. Die Wurfschaufeln können insbesondere in Scheibenebene mit unterschiedlichen Winkeln zur Radialen eingestellt werden. Durch die unterschiedliche Winkelanstellung der Wurfschaufeln kann für unterschiedliche Materialsorten und Arbeitsbreiten eine gleichmäßige Düngerverteilung erzielt werden.

Die Schleuderscheiben 5 bzw. die Dosierorgane 4 sind jeweils zueinander verstellbar, sodass die Lage des Aufgabepunktes des Düngers auf die jeweilige Schleuderscheibe 5 veränderbar ist.

Die Dosierorgane 4 weisen jeweils eine Bodenplatte 8 auf, durch welche die untere Öffnung der Auslauftrichter 3 abgeschlossen wird. In der Bodenplatte 8 sind Auslauföffnungen angeordnet, deren Öffnungsweite durch Schieber 9 einstellbar ist. Die Schieber 9 können durch motorische Einstellmittel 10 betätigt werden. Die ebenfalls in Fig. 1 dargestellten motorischen Einstellmittel 11 sind zur Einstellung des Aufgabepunktes vorgesehen.

Die Hydraulikmotoren 7 werden über geeignete Einrichtungen, beispielsweise von der Hydraulikanlage des Schleppers oder einer Hydraulikpumpe, die von dem Schlepper oder mit anderen Mitteln motorisch angetrieben wird, angetrieben. Den Hydraulikmotoren 7 ist eine Regeleinrichtung 12 zugeordnet, mittels welcher die Drehzahl der Schleuderscheiben 5 gemeinsam oder unabhängig voneinander einstellbar sind.

Von der als Regelventil ausgebildeten Regeleinrichtung 12 führt jeweils eine Drucklaufleitung 13 und eine Rücklaufleitung 14 zu dem jeweiligen Hydraulikmotor 7. In der Drucklaufleitung 13 und in der Rücklaufleitung 14 sind jeweils Druckmessgeräte 15 angeordnet. Über die Werte dieser Druckmessgeräte 15 lässt sich in Verbindung mit dem Messwert eines Durchflussmessgeräts 16 das Drehmoment ermitteln. Somit bilden die Druckmessgeräte 15 in Verbindung mit dem Durchflussmessgerät 16 einen Drehmomentsensor. In dem Antrieb der Schleuderscheiben 5 ist also ein Drehmomentsensor in Form der Geräte 15 und 16 angeordnet. Außerdem ist den Schleuderscheiben 5 bzw. deren Antriebswelle 6 jeweils ein Drehzahlsensor 17 zugeordnet, mittels welchem die Drehzahl messbar ist.

Schließlich ist noch eine Steuereinheit in Form einer elektronischen Regel- und Auswerteeinheit 18 vorgesehen. Diese Steuereinheit 18 ist über Leitungen mit den einzelnen Sensoren 15, 16, 17 verbunden, sodass die von den Sensoren 15, 16, 17 ermittelten Werte in die Steuereinheit 18 übertragbar sind.

Über die Steuereinheit 18 ist auch eine Einstellung der Dosierorgane möglich, insbesondere eine Einstellung der Position des Schiebers 9 bzw. des Aufgabepunktes. Dafür ist die Steuereinheit 18 entsprechend mit den Einstellmitteln 10, 11 verbunden. Auch die Drehzahl der Schleuderscheiben 5 kann über die Steuereinheit 18 eingestellt werden.

Die Steuereinheit 18 ist so ausgebildet, dass sie aus Werten der Sensoren 15, 16 ein Drehmoment bestimmen kann. Das erforderliche Drehmoment, um die Schleuderscheiben anzutreiben, um den Dünger in Breitenverteilung auf der Bodenoberfläche zu verteilen, ist ein Maß für die Ausbringmenge, also den Ist-Massenstrom. In der Steuereinheit 18 ist ein entsprechendes Expertenprogramm hinterlegt, welches die Zusammenhänge zwischen den Drehmomentwerten und dem Massenstrom ermittelt. Dafür können insbesondere eine oder mehrere Kennlinien hinterlegt sein, welche die Zusammenhänge repräsentieren. Hierbei können unterschiedliche Kennlinien für unterschiedliche Einstellungen der Schleuderscheiben und/oder für unterschiedliche Schleuderscheiben verwendet werden.

Die Steuereinheit 18 kann so also einen aktuellen Wert des über die Dosierorgane 4 auf die Schleuderscheiben 5 auslaufenden Massenstroms bestimmen.

Über eine nicht dargestellte Wiegeeinrichtung kann die Steuereinheit 18 außerdem einen aktuellen Wert der Streugutmenge im Vorratsbehälter 1 bestimmen.

Die Steuereinheit 18 ist dann so ausgebildet, dass sie aktuelle Werte der Streugutmenge im Vorratsbehälter 1 in festgelegten zeitlichen Abständen bestimmt und aus der Massenänderung pro Zeit auf den Massenstrom bzw. die Ausbringmenge zurückschließt, welche über die Dosierorgane 4 auf die Schleuderscheiben 5 aufgebracht wird. Diese Berechnung kann mittels eines geeigneten Filters oder Mittelwertbildung, beispielsweise eines gleitenden Mittelwertes verbessert werden.

Die Steuereinheit 18 kann so ausgebildet sein, dass sie eine Einstellung der Dosierorgane 4 basierend auf dem berechneten Wert oder den berechneten Werten der Streugutmenge im Vorratsbehälter 1 und/oder dem berechneten Wert des Massenstroms regelt. Insbesondere kann derart die Position der Schieber 9 und/oder der Aufgabepunkt geregelt werden.

Wie bereits erwähnt, ist die Erfindung nicht auf hydraulisch angetriebene Schleuderscheiben 5 begrenzt, sondern es sind auch andere Antriebe denkbar. Entsprechend dem gewählten Antrieb kann dann ein geeigneter Drehmomentsensor gewählt werden. Auch andere Sensoren, mit denen ein Ist-Massenstrom feststellbar ist, können alternativ oder zusätzlich zu den Drehmomentsensoren Einsatz finden. Beispielsweise kann es sich hierbei um Radar- und/oder Ultraschallsensoren zur Charakterisierung des Streugutfächers handeln. Diese sind ebenfalls dazu geeignet eine Ausbringmenge abzuschätzen und insbesondere auch vorhandene Blockaden zu detektieren.

Bei einer individuellen Detektion der Ausbringmenge oder des Massenstromes zweier Schleuderscheibe 5 lässt sich insbesondere mittels eines Vergleichs der Drehmomentmesswerte und/oder Radar- und/oder Ultraschalldaten zweier Schleuderscheiben auf einseitige Blockaden oder Verstopfungen schließen, welche typischerweise einseitig, also bei einer Schleuderscheibe, auftreten. Der entsprechende Messwert für die zweite Schleuderscheibe bleibt entsprechend zumindest annähernd unbeeinflusst.

Obwohl hier ein Zweischeibenstreuer gezeigt ist, können auch nur eine oder mehr als zwei Scheiben vorgesehen sein.

Der in Fig. 1 gezeigte Zentrifugalstreuer ist als Anbaugerät für einen Schlepper ausgebildet. Es wäre aber auch möglich, den Zentrifugalstreuer als Nachläufer oder sogar selbstfahrend auszubilden.

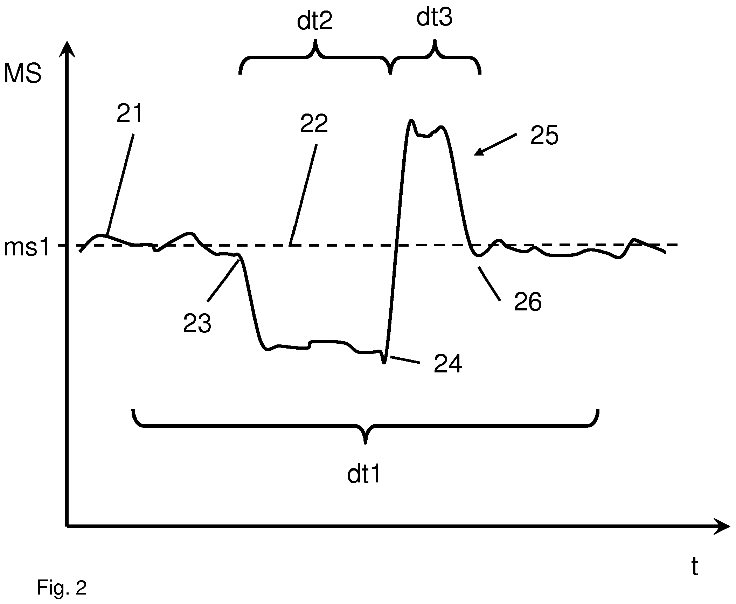

In Fig. 2 gezeigt ist eine schematische Messkurve eines Massenstromes MS in Abhängigkeit der Zeit t. Der gemessene Massenstrom 21 weist gewisse Schwankungen auf, welche beispielsweise durch Erschütterungen des Zentrifugalstreuers hervorgerufen durch Unebenheiten des Untergrundes bedingt sein können. Der tatsächliche Massenstrom kann mittels eines geeigneten Filters oder einer geeigneten Mittelwertbildung der Messwerte ermittelt werden. Im vorliegenden Fall wird eine gleitende Mittelwertbildung über einen Zeitraum dt1 vorgenommen. Der sich hieraus ergebende Wert für den Massenstrom ist als gestrichelte Linie 22 mit dem Wert ms1 angegeben. Mittels der Steuereinheit 18 wird dieser Wert aus den Messwerten der Wiegevorrichtung und dem zeitlichen Versatz dieser Messwerte bestimmt, mit einem hinterlegten Sollwert verglichen und gegebenenfalls entsprechende Regelanpassungen, vorzugsweise am Öffnungsgrad der Schieber 9, in an sich bekannter Weise vorgenommen.

Eine auftretende Verstopfung und/oder Blockade einer Auslauföffnung führt nun dazu, dass die Änderung der vorhandenen Streugutmenge im Vorratsbehälter 1 über die Zeit abnimmt und somit ebenfalls der Massenstrom aus dem Vorratsbehälter, gezeigt bei 23, abnimmt. Dies wird nun erfindungsgemäß mittels einer geeigneten Messvorrichtung 15, 16, welche beispielsweise das an den Schleuderscheiben 5 anstehende Drehmoment und/oder die Streufächercharakteristik mittels Ultraschall- oder Radasensoren misst, über einen starken Abfall des Drehmomentes und/oder der Intensität der von den Düngerkörnern reflektierten Ultraschall- oder Radarsignale detektiert.

Eine verbesserte Verstopfungsdetektion kann hierbei über einen Vergleich zweier Drehmoment- und/oder Ultraschall- und/oder Radarsensorvorrichtungen 15, 16 erfolgen, wobei jeweils zumindest eine dieser Vorrichtungen für jede Schleuderscheibe 5 vorhanden ist.

Nach einem Zeitraum dt2 erfolgt nun bei 24 eine starke Erhöhung des Massenstromes MS, da der durch die Steuereinheit 18 bestimmten Verstopfung und/oder Blockade der Auslauföffnung mittels eines Steuerbefehls entgegengewirkt wird. Dieser kann zum Beispiel ein vollständiges oder teilweises Öffnen des Schiebers 9 bewirken. Dieses führt im Normalfall zu einer Beseitigung der Verstopfung/Blockade, da das blockierende Objekt durch die vergrößerte Auslauföffnung rutschen kann. Alternativ oder zusätzlich kann ein Rührorgan in dem Vorratsbehälter 1 leistungsverstärkt angetrieben oder in seiner Rotationsrichtung geändert werden. Da die Auslauföffnung in diesem Zustand typischerweise weiter geöffnet ist, als zur Erreichung des Sollmassenstromes bei nicht blockierter Auslauföffnung notwendig übertrifft der Massenstrom nun typischerweise nach Beseitigung der Verstopfung und/oder Blockade den vorher bestimmten mittleren Massenstrom ms1 bei 25.

Die Beseitigung der Verstopfung und/oder Blockade kann hierbei nach einer hinterlegten Steuervorschrift erfolgen, die beispielsweise besagt, den Schieber 9 für 2 s um 50 % weiter oder alternativ vollständig zu öffnen und anschließend wieder auf den vorher vorliegenden Öffnungsgrad zurück zu bewegen. Es kann aber auch eine geregelte Verstopfungsbeseitigung vorgenommen werden, welche beispielsweise den Öffnungsgrad für 2 s um 20 % erhöht und falls dies nicht zu einer entsprechenden Erhöhung des Massenstromes führt in einem sukzessiven Schritt für 2 s um weitere 20 % zu öffnen und so weiter, bis die Blockade und/oder Verstopfung beseitigt ist. Anschließend wird der Schieber wieder auf den zuvor vorliegenden Öffnungsgrad zurückbewegt, um bei 26 auch den entsprechenden Massenstrom wieder einzustellen. Zur Blockadebeseitigung können die Messwerte der Drehmomentmessvorrichtung 15, 16 und/oder Ultraschall- und/oder Radarsensoren dienen, insbesondere wenn diese Vorrichtungen jeweils für jede Schleuderscheibe vorhanden sind. Alternativ oder zusätzlich können zur Verstopfungsbeseitigung auch die Messwerte der Wiegevorrichtung herangezogen werden.

In dem vorliegenden Beispiel liegt eine Verstopfung und/oder Blockade über einen Zeitraum dt2 vor, die Beseitigung der Verstopfung und/oder Blockade nimmt den Zeitraum dt3 in Anspruch. Erfindungsgemäß werden nun diese beiden Zeiträume durch die Steuereinheit 18 erfasst und bei der Ermittlung des momentanen Massenstromes ms1 nicht berücksichtigt. Auf diese Weise können durch Verstopfungen und/oder Blockaden beeinflusste Massenstrommesswerte, welche beispielsweise ein verändertes Rieselverhalten des Düngers vortäuschen würden, vermieden werden, so dass nach der Beseitigung der Blockade direkt mit der richtigen Stellung der Schieber 9 weitergearbeitet werden kann.

## Patentansprüche

1. Zentrifugalstreuer mit einem Vorratsbehälter (1) zur Aufbewahrung von Streugut, wobei das Streugut mittels zumindest zwei Schleuderscheiben (5) verteilt wird, wobei das Streugut den Streuscheiben (5) aus dem Vorratsbehälter (1) zumindest überwiegend über jeweils eine Zuführöffnung zugeführt wird, wobei dem Vorratsbehälter eine Wiegevorrichtung zur Bestimmung der im Behälter befindlichen Streugutmasse zugeordnet ist, wobei die Messsignale der Wiegevorrichtung an eine Steuereinheit (18) gesendet werden, wobei ein Programm im Speicher der Steuereinheit (18) dazu geeignet ist, aus den Messsignalen der Wiegevorrichtung die aktuelle Ausbringrate (ms1) der Verteilmaschine zu ermitteln, wobei ferner eine zweite Messvorrichtung (15,16) zur Messung einer der Ausbringrate proportionalen Größe an dem Zentrifugalstreuer angeordnet ist, wobei die Messsignale der zweiten Messvorrichtung ebenfalls an die Steuereinheit gesendet und von diesem verarbeitet werden, **dadurch gekennzeichnet, dass** das Programm im Speicher der Steuereinheit (18) geeignet ist, eine zeitgebundene Zuordnung der Messwerte der Wiegevorrichtung zu den zumindest annähernd gleichzeitig bestimmten Messwerten der zweiten Messvorrichtung (15,16) vorzunehmen und bei der Bestimmung der Ausbringrate (ms1) mittels der Messwerte der Wiegevorrichtung diejenigen Messwerte unberücksichtigt zu lassen, für die mittels des Programms aus den zugeordneten Messwerten der zweiten Messvorrichtung (15,16) ermittelt wurde, dass zumindest eine Zuführöffnung zumindest teilweise blockiert ist.

2. Zentrifugalstreuer nach Anspruch 1, **dadurch gekennzeichnet, dass** das Programm im Speicher der Steuereinheit (18) ferner dazu ausgelegt ist, die Blockade der Zuführöffnung mittels zumindest eines Steuerbefehls zu beseitigen und dass ferner die in dem Zeitraum, welcher zur Abarbeitung des zumindest einen Steuerbefehls benötigt wird, bestimmten Messwerte der Wiegevorrichtung bei der Berechnung der Ausbringrate ebenfalls unberücksichtigt bleiben.

3. Zentrifugalstreuer nach Anspruch 1 oder 2, **dadurch gekennzeichnet, dass** die zweite Messvorrichtung zumindest einen Radar- oder Ultraschallsensor zur Detektion des durch zumindest eine Schleuderscheibe abgeworfenen Streugutes umfasst.

4. Zentrifugalstreuer nach Anspruch 2 oder 3, **dadurch gekennzeichnet, dass** die zweite Messvorrichtung (15,16) zur Bestimmung des Antriebsdrehmomentes zumindest einer der Schleuderscheiben (5) ausgebildet ist.

5. Zentrifugalstreuer nach zumindest einem der Ansprüche 1 bis 4, **dadurch gekennzeichnet, dass** die zweite Messvorrichtung (15,16) zur separaten Bestimmung der Ausbringraten oder entsprechenden zu diesen proportionalen Größe der zumindest zwei Schleuderscheiben (5) ausgebildet ist.

6. Zentrifugalstreuer nach Anspruch 5, **dadurch gekennzeichnet, dass** eine Blockade einer Zuführöffnung durch einen Vergleich der Ausbringraten oder einer zu dieser proportionalen Größe zweier Schleuderscheiben (5) durch das Programm an Hand der Messwerte der zweiten Messvorrichtung (15,16) detektiert wird.

7. Zentrifugalstreuer nach zumindest einem der vorherigen Ansprüche, **dadurch gekennzeichnet, dass** die aus den Messsignalen der Wiegevorrichtung berechnete aktuelle Ausbringrate (ms1) aus einem gefilterten Mittelwert der Messsignale oder einem gefilterten Mittelwert von zu diesen Messsignalen proportionalen Werten bestimmt wird.

8. Zentrifugalstreuer nach Anspruch 6, **dadurch gekennzeichnet, dass** bei einer gefilterten Mittelwertbildung über einen ersten Zeitraum (dt1) und einer detektierten Blockade zumindest einer Zuführöffnung über einen zweiten Zeitraum (dt2) und/oder einer Abarbeitung eines Steuerbefehls über einen dritten Zeitraum (dt3), die zweiten und/oder dritten Zeiträume (dt2, dt3) bei der gefilterten Mittelwertbildung durch das Programm nicht berücksichtigt werden.

9. Verfahren zur Ausbringratenbestimmung bei einem Zentrifugalstreuer mit einem Vorratsbehälter (1) zur Aufbewahrung von Streugut, wobei das Streugut mittels zumindest zwei Schleuderscheiben (5) verteilt wird, wobei das Streugut den Streuscheiben aus dem Vorratsbehälter zumindest überwiegend über jeweils eine Zufuhröffnung zugeführt wird, wobei dem Vorratsbehälter eine Wiegevorrichtung zugeordnet ist, wobei die Messsignale der Wiegevorrichtung an eine Steuereinheit (18) gesendet werden, wobei ein Programm im Speicher der Steuereinheit (18) dazu geeignet ist, aus den Messsignalen der Wiegevorrichtung die aktuelle Ausbringrate (ms1) der Verteilmaschine zu ermitteln, wobei ferner eine zweite Messvorrichtung (15,16) zur Messung einer der Ausbringrate proportionalen Größe an dem Zentrifugalstreuer angeordnet ist, wobei die Messsignale der zweiten Messvorrichtung (15,16) ebenfalls an die Steuereinheit gesendet und von dieser verarbeitet werden und **dadurch gekennzeichnet, dass** eine zeitgebundene Zuordnung der Messwerte der Wiegevorrichtung zu den zumindest annähernd gleichzeitig bestimmten Messwerten der zweiten Messvorrichtung (15,16) vorgenommen wird und bei der Bestimmung der Ausbringrate (ms1) mittels der Messwerte der Wiegevorrichtung diejenigen Messwerte unberücksichtigt bleiben, für die aus den zugeordneten Messwerten der zweiten Messvorrichtung (15,16) ermittelt wurde, dass zumindest eine Zuführöffnung zumindest teilweise blockiert ist.

10. Verfahren nach Anspruch 9, **dadurch gekennzeichnet, dass** vorgesehen ist, die Blockade der Zuführöffnung mittels zumindest eines Steuerbefehls zu beseitigen und dass ferner die in dem Zeitraum, welcher zur Abarbeitung des zumindest einen Steuerbefehls benötigt wird, bestimmten Messwerte der Wiegevorrichtung bei der Berechnung der Ausbringrate ebenfalls unberücksichtigt bleiben.

11. Verfahren nach Anspruch 9 oder 10, **dadurch gekennzeichnet, dass** die zweite Messvorrichtung (15,16) zur separaten Bestimmung der Ausbringraten oder entsprechenden zu diesen proportionalen Größe der zumindest zwei Schleuderscheiben (5) ausgebildet ist und dass eine Blockade einer Zuführöffnung durch einen Vergleich der Ausbringraten oder einer zu dieser proportionalen Größe zweier Schleuderscheiben (5) an Hand der Messwerte der zweiten Messvorrichtung (15,16) detektiert wird.

12. Zentrifugalstreuer nach zumindest einem der Ansprüche 9 - 11, **dadurch gekennzeichnet, dass** die aus den Messsignalen der Wiegevorrichtung berechnete aktuelle Ausbringrate (ms1) aus einem gefilterten Mittelwert der Messsignale oder einem gefilterten Mittelwert von zu diesen Messsignalen proportionalen Werten bestimmt wird.

13. Zentrifugalstreuer nach zumindest einem der Ansprüche 9 - 12, **dadurch gekennzeichnet, dass** bei einer gefilterten Mittelwertbildung über einen ersten Zeitraum (dt1) und einer detektierten Blockade zumindest einer Zuführöffnung über einen zweiten Zeitraum (dt2) und/oder einer Abarbeitung eines Steuerbefehls über einen dritten Zeitraum (dt3), die zweiten und/oder dritten Zeiträume (dt2, dt3) bei der gefilterten Mittelwertbildung durch das Programm nicht berücksichtigt werden.
